# FASCICULE DE BREVET EUROPEEN

(11) **EP 1 763 429 B1**
(45) Date de publication et mention de la délivrance du brevet: **13.01.2010**
(21) Numéro de dépôt: 05758444.3
(22) Date de dépôt: 01.07.2005
(51) Int. Cl.: B29C 49/78, B29C 49/68

(54) **FOUR DE CHAUFFAGE D'UNE PRÉFORME COMPORTANT UN ORGANE DE COMMANDE DU DÉPLACEMENT D'UN MOYEN DE CHAUFFAGE ENTRE DES POSITIONS INDEXÉES**
OFEN ZUM ERWÄRMEN EINES VORFORMLINGS MIT EINEM GLIED ZUR STEUERUNG DER BEWEGUNG EINES HEIZMITTELS ZWISCHEN SCHALT-POSITIONEN
PREFORM-HEATING FURNACE COMPRISING A MEMBER FOR CONTROLLING THE MOVEMENT OF A HEATING MEANS BETWEEN INDEXED POSITIONS

(30) Priorité: 08.07.2004 FR 0451473
(43) Date de publication de la demande: 21.03.2007
(73) Titulaire: Sidel Participations, 76930 Octeville Sur Mer (FR)
(72) Inventeur: DOUDEMENT, Christophe, c/o Sidel Participations, F-76930 Octeville Sur Mer (FR)
(74) Mandataire: Kohn, Philippe
(86) Numéro de dépôt international: PCT/EP2005/053137
(87) Numéro de publication internationale: WO 2006/010694

(56) Documents cités:
- DE-U1- 20 005 210
- US-A- 4 923 395
- US-A- 5 688 466
- US-A- 6 005 223

## Description

La présente invention concerne un four de chauffage d'une préforme comportant un organe de commande du déplacement d'un moyen de chauffage entre des positions indexées.

La fabrication de récipients, et notamment de bouteilles, en matériau thermoplastique tel que le polyéthylène téréphtalate (PET), est généralement réalisée à partir de préformes préalablement injectées qui sont conformées en récipients par une opération de soufflage ou d'étirage-soufflage de leur corps et de leur fond. Le col des préformes n'est pas modifié lors de leur transformation en récipients.

Avant de réaliser l'opération de soufflage ou d'étirage-soufflage, il est nécessaire de réchauffer dans un four de chauffage une première partie de chaque préforme, plus précisément le corps et le fond, à une température supérieure à la température de transition vitreuse du matériau constitutif, afin d'en ramollir ledit matériau et ainsi de permettre sa déformation.

Pour cela, il est connu de réaliser le chauffage de ladite première partie des préformes dans un four comportant un tunnel longitudinal de chauffage. Un four comprend un ou plusieurs modules successifs le long du tunnel. Chaque module comporte une superposition de tubes (lampes halogènes) disposés le long d'une paroi du tunnel, avec leur axe parallèle à l'axe longitudinal du tunnel ; l'autre paroi du tunnel comporte des éléments réflecteurs et les préformes sont déplacées entre les lampes et les éléments réflecteurs tout en étant mises en rotation sur elles-mêmes, afin de répartir la température sur leur périphérie.

Il convient toutefois de noter que la répartition de température est généralement non homogène en tous points de ladite première partie des préformes, le profil de chauffe étant prédéterminé en fonction de la forme du récipient définitif.

Afin d'obtenir un profil de chauffe prédéterminé, il est connu :
- de régler la puissance d'émission de chacune des lampes de chacun des modules de façon appropriée : en d'autres termes, les lampes d'un même module n'émettent généralement pas toutes à la même puissance, et il en est de même des lampes correspondantes de deux modules distincts qui n'émettent généralement pas à la même puissance ; et/ou
- dans certains cas, pour obtenir des récipients de profil particulier (flacons de section ovale par exemple) de modifier l'agencement des réflecteurs pour que sur une section, la température varie (le document FR-A-2.703.944 au nom de la Demanderesse divulgue un tel agencement modifié) ; et/ou
- de monter les moyens de chauffage mobiles transversalement et avec une possibilité de réglage de leur position afin de régler la distance entre chacun des moyens de chauffage et les corps des préformes : une telle possibilité de réglage permet d'adapter la configuration du four au profil des préformes devant servir pour une production de récipients donnés, ce qui augmente la latitude de réglage de la chauffe, en complément des mesures énoncées ci-avant.

Actuellement, le réglage de la distance des moyens de chauffage est réalisé au moyen de jeux de cales dont l'épaisseur est calibrée et qui sont interposées entre une partie des moyens de chauffage, généralement les connecteurs, et une partie fixe de référence solidaire du module de chauffage. Il est ainsi possible de positionner chaque lampe à une distance précise du corps des préformes avant de procéder à son immobilisation dans la position désirée par exemple par des moyens de verrouillage tels que des vis.

Toutefois, bien que permettant un réglage précis de la position de chaque moyen de chauffage, une telle solution ne donne pas entière satisfaction.

Les opérations de réglage de la position des moyens de chauffage requièrent notamment une longue et coûteuse immobilisation des fours de chauffage car il est nécessaire de procéder au démontage d'une partie de chacun des modules que le four comporte pour accéder aux moyens de chauffage et procéder individuellement à leur positionnement.

De surcroît, le temps d'intervention est augmenté par le fait que l'opérateur doit procéder au déverrouillage et au reverrouillage de chaque moyen de chauffage et que les cales, généralement de faibles dimensions, sont susceptibles d'être perdues par les opérateurs lors des opérations de démontage et de réglage.

On connaît aussi du document US-A-4.923.395 qui represente le préembule de la revendication 1, un four de chauffage de préformes comportant des moyens de réglage de la position transversale de moyens de chauffage à rayonnement qui sont montés mobiles transversalement sur des supports entre plusieurs positions indexées.

Les moyens de réglage et d'indexation sont constitués par un dispositif à bille qui, solidaire du four, comporte un écrou de retenue d'un ressort sollicitant une bille dans un des crans complémentaires que comporte chaque tige transversale formant les supports des moyens de chauffage. Les tiges de support sont montées coulissantes transversalement et sont susceptibles d'être manoeuvrées entre les différentes positions par l'intermédiaire d'une poignée située à l'extrémité distale de chaque tige de support.

Toutefois, un tel dispositif de verrouillage à bille ne donne pas entière satisfaction, notamment en ce qu'il est coûteux à réaliser du fait des nombreux usinages requis mais encore du point de vue de la fiabilité en fonctionnement du dispositif.

En effet, dans les fours de chauffage, les températures élevées atteintes provoquent d'importantes dilatations thermiques de sorte qu'un tel dispositif à bille est particulièrement sensible aux risques de disfonctionnement, notamment par coincement de l'ensemble bille-ressort.

De plus, en fonctionnement d'une installation comportant un tel four, des vibrations sont susceptibles de provoquer le desserrage des écrous de retenue des ressorts qui sollicitent les billes dans les crans des tiges de support. Ainsi, il existe un risque que le dispositif se déverrouille et que les tiges de support des moyens de chauffage ne soient plus bloquée à la distance déterminée des préformes requise.

Les moyens de réglage sont constitués par des pièces métalliques qui présentent une forte inertie thermique et sur lesquelles s'opère un important transfert de chaleur qui est transmise aux connecteurs provoquant une réduction de la durée de vie des moyens de chauffage.

L'invention a notamment pour but de remédier à ces inconvénients et de proposer un four de chauffage d'une préforme comportant des moyens perfectionnés de commande et de réglage de la position des moyens de chauffage.

Dans ce but, l'invention propose un four de chauffage de préformes, notamment de préformes en matière thermoplastique destinées à la fabrication de récipients par soufflage ou par étirage-soufflage, du type comportant un tunnel longitudinal de chauffage d'au moins une partie des préformes, le tunnel comprenant au moins un module de chauffage avec des parois verticales entre lesquelles circulent les préformes , au moins une paroi verticale du module de chauffage étant pourvue d'au moins un moyen de chauffage à rayonnement qui est monté mobile transversalement sur des supports et de moyens de réglage de la position transversale du moyen de chauffage pour régler la distance transversale entre le moyen de chauffage en la ladite partie des préformes, les moyens de réglage de la position du moyen de chauffage comportant au moins un organe de commande du déplacement du moyen de chauffage entre au moins deux positions transversales, respectivement proximale et distale, qui sont indexées par des moyens d'indexation intervenant entre l'organe de commande et les supports de manière à positionner le moyen de chauffage à une distance transversale déterminée de ladite partie des préformes, **caractérisé en ce que** l'organe de commande comporte un bossage d'indexation qui est susceptible de se déformer élastiquement de manière à s'emboîter dans des crans complémentaires du support correspondant respectivement aux positions proximale et distale.

Grâce à l'invention, le changement de position de chaque moyen de chauffage est simple et rapide, en effet les déplacements des moyens de chauffage entre les différentes positions transversales indexées sont obtenus par un simple effort de traction ou de poussée de l'opérateur sur les organes de commande.

Selon d'autres caractéristiques de l'invention :
- les supports comportent au moins deux supports transversaux entre lesquels s'étend longitudinalement au moins un moyen de chauffage, chaque support transversal comportant au moins un logement avant dans lequel est monté à jeu l'une des extrémités du moyen de chauffage ;
- chaque support transversal comporte au moins une rainure transversale qui débouche respectivement à l'avant dans le logement de montage du moyen de chauffage et à l'arrière à l'extérieur du support et dans laquelle l'organe de commande coulisse transversalement vers l'avant ou vers l'arrière ;
- l'organe de commande comporte un tronçon de tête, reçu dans le logement du support, qui est lié transversalement en déplacement au moyen de chauffage ;
- l'organe de commande comporte un tronçon intermédiaire de liaison qui s'étend transversalement en arrière du tronçon de tête et qui coulisse dans la rainure transversale du support ;
- l'organe de commande comporte, transversalement en arrière du tronçon intermédiaire de liaison, un tronçon de queue s'étendant en saillie hors de la rainure qui constitue une partie préhensile pour commander le déplacement du moyen de chauffage vers l'avant ou vers l'arrière entre les positions proximale et distale ;
- le bossage d'indexation des positions transversales du moyen de chauffage est réalisé venu de matière dans le tronçon intermédiaire de l'organe de commande ;
- le moyen de chauffage comporte à chacune de ses extrémités un connecteur qui est solidaire du tronçon de tête de l'organe de commande,
- les supports transversaux comportent des moyens de refroidissement par circulation d'air des connecteurs du moyen de chauffage ;
- l'organe de commande comporte à l'avant un déflecteur de manière à limiter la circulation de l'air de refroidissement en direction du moyen de chauffage ;
- chaque support transversal constitue un râtelier comportant verticalement une pluralité de logements de manière à permettre la superposition verticale de plusieurs moyens de chauffage sur une hauteur déterminée en fonction de la hauteur du corps des préformes ;
- les moyens d'indexation constituent des moyens de verrouillage automatique du moyen de chauffage dans ses positions proximale et distale.

D'autres caractéristiques et avantages de l'invention apparaîtront à la lecture de la description détaillée qui suit ainsi qu'au vu des dessins dans lesquels :
- la figure 1 est une vue partielle en perspective d'un four de chauffage illustrant un module de chauffage comportant des moyens de chauffage susceptibles d'être déplacés transversalement entre des positions indexées par l'intermédiaire de tringles de commande ;
- la figure 2 est une vue de détail en perspective illustrant un des supports entre lesquels s'étendent les moyens de chauffage et dans lequel est monté coulissant l'organe de commande ;
- la figure 3 est une vue de détail en perspective de l'organe de commande du déplacement des moyens de chauffage.

Dans la description qui va suivre, des chiffres de référence identiques désignent des pièces identiques ou ayant des fonctions similaires.

Par convention, et à titre non limitatif, on utilisera les termes "avant" ou "arrière" et les directions "longitudinale", "transversale" ou "verticale" pour désigner respectivement des éléments ou des positions selon les définitions données dans la description et le trièdre (L, V, T) représenté sur les figures.

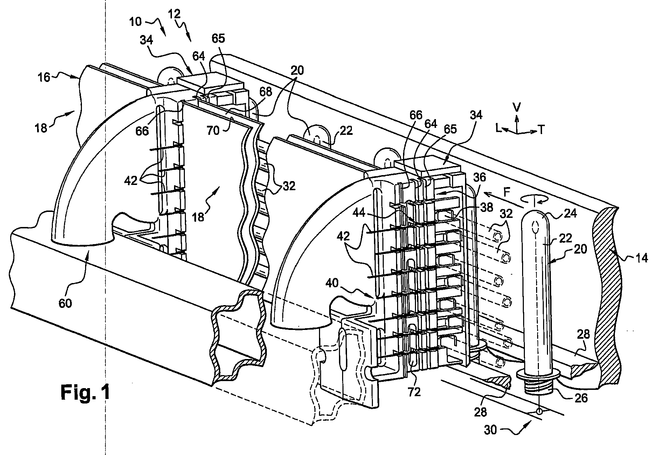

On a représenté à la figure 1 une partie d'un four 10 de chauffage comportant un tunnel 12 de chauffage d'orientation longitudinale que délimitent transversalement deux parois latérales verticales, respectivement une paroi 14 latérale verticale droite et une paroi 16 latérale verticale gauche.

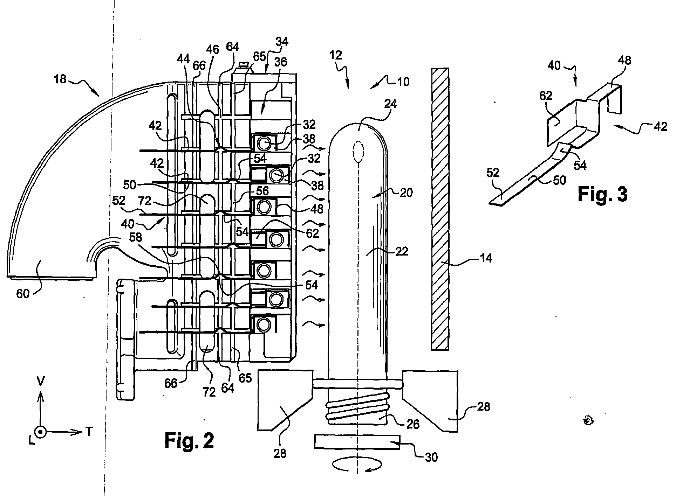

Le tunnel 12, comporte successivement selon sa direction longitudinale des modules 18 de chauffage des préformes 20 dont l'un est plus particulièrement illustré sur les figures 1 et 2.

De manière connue, une préforme 20 de récipient, obtenue par exemple par moulage par injection, comporte principalement un corps 22 sensiblement cylindrique de révolution d'axe vertical avec une paroi épaisse. La préforme 20 comporte à une première extrémité du corps 22, ici supérieure, un fond 24 hémisphérique à paroi épaisse et à l'autre extrémité, ici inférieure, un col 26 ou goulot conformé à sa forme et à ses dimensions définitives.

Comme expliqué en préambule, l'étape de chauffage préliminaire consiste à chauffer le corps 22 et le fond 24 de la préforme 20, en excluant le col 26, à une température supérieure à la température de transition vitreuse ou température d'amollissement du matériau thermoplastique constitutif de la préforme 20.

En effet, le col 26 de la préforme 20, étant conformé à sa forme et à ses dimensions définitives lors de l'injection de la préforme, ne doit pas être déformé lors des opérations de chauffage et/ou de soufflage.

Il est donc essentiel de maintenir le col 26 à une température inférieure à la température de transition vitreuse, c'est la raison pour laquelle on dispose généralement les préformes 20 le col 26 en bas, à l'extérieur du tunnel 12, afin de limiter un réchauffage du col 26 par des mouvements ascendant de convection de l'air chaud et/ou on protège le col des rayonnements.

Avantageusement, pour protéger les cols 26 des rayonnements, le four 10 de chauffage comporte des moyens de protection des cols 26 des préformes 20, tels que des déflecteurs 28 qui s'étendent longitudinalement suivant le parcours effectué par les préformes 20 selon la flèche F d'amont en aval dans le tunnel 12 de chauffage du four 10.

Chaque préforme 20 froide s'étendant verticalement col 26 en bas est transportée par un dispositif de transport 30 depuis une première extrémité amont du tunnel 12 de chauffage, afin de circuler à l'intérieur des modules 18 de chauffage du tunnel 12 de chauffage dans lequel le corps 22 et le fond 24 de la préforme 20 sont chauffés au delà de la température de transition vitreuse avant de ressortir par la seconde extrémité, avale, du tunnel 12 de chauffage. La préforme 20 ainsi réchauffée est alors prête pour l'opération de soufflage ou d'étirage-soufflage.

Pour assurer le chauffage en profondeur du fond 24 et de la paroi cylindrique du corps 22 de la préforme 20 sur toute sa périphérie, le dispositif de transport 30 comporte de préférence des moyens (non représentés) pour mettre en rotation sur elles-mêmes les préformes 20 pendant leur circulation dans le tunnel 12 de chauffage du four 10.

Le four 10 de chauffage peut comporter un ou plusieurs modules 18 de chauffage qui comportent chacune une portion de tunnel 12 de chauffage et qui sont alignés les uns à la suite des autres de manière à former un tunnel unique de grande longueur. Le tunnel 12 de chauffage est par ailleurs susceptible de comporter entre deux modules 18 successifs de chauffage des zones non chauffantes, ou zones de stabilisation (non représentées).

Le module 18 de chauffage comporte des moyens de chauffage 32 à rayonnement, tels que des lampes à rayonnement infrarouge, généralement de forme tubulaire, qui s'étendent longitudinalement globalement parallèlement au flux de préformes 20 circulant dans le tunnel 12 de chauffage suivant la flèche F. Sur les figures, ces moyens sont disposés le long de la paroi 16 latérale verticale gauche.

De façon connue, la paroi 14 latérale verticale droite est par exemple munie, en regard des moyens de chauffage 32 de réflecteurs et/ou d'orifices (non représentés) de passage d'air soufflé afin de favoriser une bonne pénétration thermique dans toute l'épaisseur de la paroi du corps 22 et du fond 24 de la préforme 20. La présence de réflecteurs évite que du rayonnement utile soit absorbé par cette paroi 14, et l'air soufflé permet d'évacuer la chaleur de convection provoquée par les moyens de chauffage 32 pour favoriser la pénétration du rayonnement qu'ils engendrent dans l'épaisseur de la matière constituant le corps 22 et le fond 24 de la préforme 20.

De façon connue, également, les moyens de chauffage 32 du module 18 de chauffage sont constitués par des lampes, ici de forme tubulaire, qui s'étendent longitudinalement entre deux supports 34 transversaux respectivement amont et aval.

Chaque support 34 comporte latéralement au moins un logement 36 avant dans lequel est monté à jeu suivant la direction transversale l'une des extrémités de la lampe tubulaire constituant le moyen de chauffage 32. Plus précisément chaque lampe comporte à chacune de ses extrémités longitudinales un connecteur 38 qui est reçu dans le logement 36 avant.

Le connecteur 38 et le logement 36 avant sont de forme complémentaire, ici globalement parallélépipédique.

Chaque lampe constituant un moyen de chauffage 32 est ainsi montée mobile transversalement entre deux supports 34 qui comportent des moyens de réglage 40 de la position transversale de chaque lampe de manière à permettre un réglage de la distance transversale entre chaque lampe formant un moyen de chauffage 32 et la partie à chauffer, c'est-à-dire le corps 22 et le fond 24 de chaque préforme 20.

Chaque support 34 constitue ici un râtelier comportant verticalement une pluralité de logements 36 avant de manière à permettre la superposition verticale de plusieurs moyens de chauffage 32 s'étendant parallèlement à la direction longitudinale de défilement des préformes 20 et sur une hauteur déterminée en fonction de la hauteur cumulée du corps 22 et du fond 24 des préformes 20.

Les moyens de réglage 40 de la position des moyens de chauffage 32 comportent au moins un organe de commande 42 du déplacement de chaque moyen de chauffage 32 entre au moins deux positions transversales, respectivement une première position proximale et une deuxième position distale, qui sont indexées par des moyens d'indexation 44.

Comme on peut le voir sur la figure 2, les moyens d'indexation 44 des positions proximale et distale des moyens de chauffage 32 interviennent entre l'organe de commande 42 et le support 34 de manière à positionner chaque moyen de chauffage 32 à une distance transversale déterminée du corps 22 et du fond 24 des préformes 20.

Chaque support 34 comporte une rainure 46 transversale pour le montage de chaque organe de commande 42, la rainure 46 transversale est ouverte longitudinalement vers l'extérieur et débouche transversalement respectivement à l'avant dans le logement 36 avant de montage d'un des connecteurs 38 d'une lampe et à l'arrière à l'extérieur du support 34 du module 18 de chauffage.

Chaque organe de commande 42 est susceptible de coulisser transversalement d'avant en arrière, et réciproquement, dans la rainure 46 pour déplacer le moyen de chauffage 32 associé entre l'une et l'autre de ses positions indexées.

A cet effet, l'organe de commande 42 comporte un tronçon de tête 48 qui s'étend transversalement à l'avant dans le logement 36 avant du support 34, c'est-à-dire hors de la rainure 46 transversale, et qui est lié transversalement au connecteur 38 du moyen de chauffage 32 dont il commande le déplacement.

Le tronçon de tête 48 est en section transversale globalement en forme de « U » inversé et dont les dimensions sont complémentaires du connecteur 38 de forme parallélépipédique, sur lequel il est avantageusement monté serré.

Comme on peut le voir sur l'agrandissement de la figure 3, l'organe de commande 42 comporte un tronçon intermédiaire 50 de liaison, qui s'étend transversalement en arrière du tronçon de tête 48, et qui se prolonge transversalement vers l'arrière par un tronçon de queue 52.

Le tronçon de queue 52 s'étend en saillie hors de la rainure 46 transversale et constitue une partie préhensile sur laquelle un opérateur est susceptible d'exercer un effort de poussée vers l'avant ou de traction vers l'arrière afin de provoquer, par cette manoeuvre de l'organe de commande 42, le déplacement du moyen de chauffage 32 entre ses positions proximale et distale.

Comme on peut le voir sur les figures 1 et 2, l'organe de commande 42 comporte un bossage d'indexation 54 qui est susceptible de se déformer élastiquement, ici suivant la direction verticale, de manière à s'emboîter dans des crans complémentaires du support 34.

La rainure 46 transversale comporte dans sa face horizontale supérieure au moins un cran avant 56 et un cran arrière 58 correspondant respectivement aux positions proximale et distale du moyen de chauffage 32.

Le bossage d'indexation 54 est ici réalisé venu de matière dans le tronçon intermédiaire 50 de l'organe de commande 42 qui coulisse dans la rainure 46 transversale.

Avantageusement, les supports 34 transversaux comportent des moyens 60 de circulation d'air pour refroidir les connecteurs 38 de chaque moyen de chauffage 32 et ainsi prolonger la durée de vie des moyens de chauffage 32.

Toutefois, l'organe de commande 42 comporte à la jonction entre le tronçon de tête 48 et le tronçon intermédiaire 50 un déflecteur 62 vertical s'étendant transversalement vers l'arrière de manière à limiter, lorsque l'organe de commande 42 se trouve en position proximale avant, la circulation à travers le logement 36 avant de l'air destiné à refroidir les connecteurs 38, notamment en direction des moyens de chauffage 32.

De préférence, les supports 34 transversaux ou râteliers comportent latéralement et transversalement en arrière des crans avant 56 et arrière 58, encore appelés crans d'indexation, deux rainures verticales avant 64 et arrière 66, sensiblement rectilignes, dans lesquelles sont montés des panneaux avant 68 et arrière 70.

Le panneau avant 68 constitue ici un réflecteur dont la face verticale avant renvoie le rayonnement des moyens de chauffage 32 en direction de la partie à réchauffer, c'est-à-dire le corps 22 et le fond 24, des préformes 20.

Avantageusement, le support 34 tel qu'un râtelier comporte des ouvertures 72 de refroidissement qui communiquent avec les moyens 60 de refroidissement et qui débouchent entre les panneaux avant 68 et arrière 70 de manière à provoquer une circulation d'air et à refroidir notamment le panneau avant 68 ainsi que la partie arrière des organes de commande 42.

Avantageusement, l'organe de commande 42 est une lame métallique de faible épaisseur, ce qui favorise les échanges thermiques avec l'air environnant et par conséquent son refroidissement, ainsi que celui du connecteur 38 dont il est solidaire en déplacement.

Le support 34 tel que le râtelier comporte ici latéralement deux rainures verticales avant 64 et 65 qui traversent les rainures 46 transversales dans lesquelles coulissent les organes de commande 42 de sorte que l'intersection de chacune des rainures verticales avant 64 et 65 avec une rainure 46 transversale forme respectivement les crans arrière 58 et avant 56 dans lesquels s'emboîte le bossage d'indexation 54 porté par l'organe de commande 42.

Le panneau avant 68 est ainsi susceptible d'être monté dans l'une ou l'autre des rainures verticales avant 64 ou 65.

Avantageusement, les moyens de réglage 40 par indexation constituent des moyens de verrouillage automatique des moyens de chauffage 32 dans leurs positions proximale et distale de sorte qu'il est possible de simplifier la conception d'un module 18 de chauffage par suppression des moyens de verrouillage de l'état de la technique tels que les vis et de réduire la durée d'intervention de l'opérateur pour effectuer les réglages des positions des moyens de chauffage 32.

Bien entendu, chaque moyen de chauffage 32 est susceptible d'être déplacé entre plus de deux positions indexées en fonction des applications et de la précision désirée dans le réglage de la distance transversale.

De préférence, le tronçon de queue 52 de chaque organe de commande 42 comporte des moyens de contrôle visuel (non représentés), tels que des traits ou encoches, indiquant à l'opérateur de manière simple et immédiate dans quelle position se trouve le moyen de chauffage 32 correspondant.

Avantageusement, l'organe de commande 42 qui est en saillie à l'arrière du module 18 de chauffage permet à l'opérateur d'intervenir sans avoir à procéder à une quelconque opération de démontage sur le module 18 de chauffage pour procéder au changement de position.

Avantageusement, le verrouillage de la position transversale indexée des moyens de chauffage 32 s'effectue automatiquement dès que le bossage d'indexation 54 pénètre dans un des crans des moyens d'indexation 44.

## Revendications

1. Four (10) de chauffage de préformes (20), notamment de préformes en matière thermoplastique destinées à la fabrication de récipients par soufflage ou par étirage-soufflage, du type comportant au moins un tunnel (12) longitudinal de chauffage d'au moins une partie (22, 24) des préformes (20), le tunnel comprenant au moins un module (18) de chauffage avec des parois (14, 16) verticales entre lesquelles circulent les préformes (20), au moins une paroi verticale du module (18) de chauffage étant pourvue d'au moins un moyen de chauffage (32) à rayonnement qui est monté mobile transversalement sur des supports (34) et de moyens de réglage (40) de la position transversale du moyen de chauffage (32) pour régler la distance transversale entre le moyen de chauffage (32) et ladite partie (22, 24) des préformes (20), les moyens de réglage (40) de la position du moyen de chauffage (32) comportant au moins un organe de commande (42) du déplacement du moyen de chauffage (32) entre au moins deux positions transversales, respectivement proximale et distale, qui sont indexées par des moyens d'indexation (54, 56, 58) intervenant entre l'organe de commande (42) et les supports (34) de manière à positionner le moyen de chauffage (32) à une distance transversale déterminée de ladite partie (22, 24) des préformes (20), **caractérisé en ce que** l'organe de commande (42) comporte un bossage d'indexation (54) qui est susceptible de se déformer élastiquement de manière à s'emboîter dans des crans d'indexation (56, 58) complémentaires du support (34) correspondant respectivement aux positions proximale et distale.

2. Four de chauffage selon la revendication 1, **caractérisé en ce que** les supports comportent au moins deux supports (34) transversaux entre lesquels s'étend longitudinalement au moins un moyen de chauffage (32), chaque support (34) comportant au moins un logement (36) avant dans lequel est monté à jeu l'une des extrémités du moyen de chauffage (32).

3. Four (10) de chauffage selon la revendication 2, **caractérisé en ce que** chaque support (34) comporte au moins une rainure (46) transversale qui débouche respectivement à l'avant dans le logement (36) de montage du moyen de chauffage et à l'arrière à l'extérieur du support (34) et dans laquelle l'organe de commande (42) coulisse transversalement vers l'avant ou vers l'arrière.

4. Four (10) de chauffage selon l'une des revendications 2 ou 3, **caractérisé en ce que** l'organe de commande (42) comporte un tronçon de tête (48), reçu dans le logement (36) du support (34), qui est lié transversalement en déplacement au moyen de chauffage (32).

5. Four (10) de chauffage selon la revendication 3, **caractérisé en ce que** l'organe de commande (42) comporte un tronçon intermédiaire (50) de liaison qui s'étend transversalement en arrière du tronçon de tête (48) et qui coulisse dans la rainure (46) transversale du support (34).

6. Four (10) de chauffage selon la revendication 5, **caractérisé en ce que** l'organe de commande (42) comporte, transversalement en arrière du tronçon intermédiaire (50) de liaison, un tronçon de queue (52) s'étendant en saillie hors de la rainure (46) qui constitue une partie préhensile pour commander le déplacement du moyen de chauffage (32) vers l'avant ou vers l'arrière entre les positions proximale et distale.

7. Four (10) de chauffage selon l'une des revendications 5 ou 6, **caractérisé en ce que** le bossage d'indexation (54) des positions transversales du moyen de chauffage (32) est réalisé venu de matière dans le tronçon intermédiaire (50) de l'organe de commande (42).

8. Four (10) de chauffage selon la revendication 7, **caractérisé en ce que** le moyen de chauffage (32) comporte à chacune de ses extrémités un connecteur (38) qui est solidaire du tronçon de tête (48) de l'organe de commande (42).

9. Four (10) de chauffage selon l'une des revendications 7 ou 8, **caractérisé en ce que** les supports (34) transversaux comportent des moyens (60, 72) de refroidissement par circulation d'air des connecteurs (38) du moyen de chauffage (32).

10. Four (10) de chauffage selon la revendication 9, **caractérisé en ce que** l'organe de commande (42) comporte à l'avant un déflecteur (62) de manière à limiter la circulation de l'air de refroidissement en direction du moyen de chauffage (32).

11. Four (10) de chauffage selon l'une quelconque des revendications 2 à 10, **caractérisé en ce que** chaque support (34) constitue un râtelier comportant verticalement une pluralité de logements (36) de manière à permettre la superposition verticale de plusieurs moyens de chauffage (32) sur une hauteur déterminée en fonction de la hauteur de ladite partie (22, 24) des préformes (20).

12. Four (10) de chauffage selon l'une quelconque des revendications précédentes, **caractérisé en ce que** les moyens d'indexation (54, 56, 58) constituent des moyens de verrouillage automatique du moyen de chauffage (32) dans ses positions proximale et distale.

## Claims

1. A furnace (10) for heating preforms (20), particularly preforms made of thermoplastic designed for the manufacture of receptacles by blow molding or by stretch-blow molding, of the type comprising at least one longitudinal tunnel (12) for heating at least a part (22, 24) of the preforms (20), the tunnel comprising at least one heating module (18) with vertical walls (14, 16) between which the preforms (20) travel, at least one vertical wall of the heating module (18) being provided with at least one radiation heating means (32) that is mounted so as to be movable transversely on supports (34) and means (40) for adjusting the transverse position of the heating means (32) to adjust the transverse distance between the heating means (32) and said part (22, 24) of the preforms (20), the means (40) for adjusting the position of the heating means (32) comprising at least one member (42) for controlling the movement of the heating means (32) between at least two, respectively proximal and distal, transverse positions that are indexed by indexation means (54, 56, 58) intervening between the control member (42) and the supports (34) so as to position the heating means (32) at a determined transverse distance from said part (22, 24) of the preforms (20), **characterized in that** the control member (42) comprises an indexation boss (54) that is able to deform elastically so as to fit into complementary indexation notches (56, 58) of the support (34) corresponding respectively to the proximal and distal positions.

2. The heating furnace as claimed in claim 1, **characterized in that** the supports comprise at least two transverse supports (34) between which at least one heating means (34) extends longitudinally, each support (34) comprising at least one front housing (36) in which one of the ends of the heating means (32) is mounted with clearance.

3. The heating furnace (10) as claimed in claim 2, **characterized in that** each support (34) comprises at least one transverse groove (46) which opens respectively at the front in the housing (36) for mounting the heating means and at the rear outside the support (34) and in which the control member (42) slides transversely forward or rearward.

4. The heating furnace (10) as claimed in one of claims 2 or 3, **characterized in that** the control member (42) comprises a head section (48), received in the housing (36) of the support (34), that is connected transversely in movement to the heating means (32).

5. The heating furnace (10) as claimed in claim 3, **characterized in that** the control member (42) comprises an intermediate connection section (50) which extends transversely behind the head section (48) and which slides in the transverse groove (46) of the support (34).

6. Heating furnace (10) as claimed in claim 5, **characterized in that** the control member (42) comprises, transversely behind the intermediate connection section (50), a tail section (52) extending as a protrusion outside the groove (46) that forms a prehensile part for controlling the forward or rearward movement of the heating means (32) between the proximal and distal positions.

7. The heating furnace (10) as claimed in one of claims 5 or 6, **characterized in that** the boss (54) for indexing the transverse positions of the heating means (32) is made as one piece in the intermediate section (50) of the control member (42).

8. The heating furnace (10) as claimed in claim 7, **characterized in that** the heating means (32) comprises, at each of its ends, a connector (38) that is fixedly attached to the head section (48) of the control member (42).

9. The heating furnace (10) as claimed in one of claims 7 or 8, **characterized in that** the transverse supports (34) comprise means (60, 72) for cooling, by air circulation, the connectors (38) of the heating means (32).

10. The heating furnace (10) as claimed in claim 9, **characterized in that** the control member (42) comprises at the front a deflector (62) so as to limit the circulation of the cooling air in the direction of the heating means (32).

11. The heating furnace (10) as claimed in any one of claims 2 to 10, **characterized in that** each support (34) forms a rack comprising vertically a plurality of housings (36) so as to allow the vertical superposition of several heating means (32) over a determined height according to the height of said part (22, 24) of the preforms (20).

12. The heating furnace (10) as claimed in any one of the preceding claims, **characterized in that** the indexation means (54, 56, 58) form means for automatically locking the heating means (32) in its proximal and distal positions.

## Patentansprüche

1. Ofen (10) zum Erwärmen von Vorformlingen (20), insbesondere Vorformlingen aus Thermoplasten, zur Herstellung von Behältern durch Blasen oder Streckblasen, mit mindestens einem längsverlaufenden Heizkanal (12) für mindestens einen Teil (22, 24) der Vorformlinge (20), wobei der Kanal mindestens ein Heizmodul (18) mit vertikalen Wänden (14,16) aufweist, zwischen denen die Vorformlinge (20) zirkulieren, wobei mindestens eine vertikale Wand des Heizmoduls (18) mit mindestens einem Heizmittel (32) zur Bestrahlung ausgestattet ist, das querverlaufend beweglich an Halterungen (34) und Regelungseinrichtungen (40) für die querverlaufende Position des Heizmittels (32) montiert ist, um den querverlaufenden Abstand zwischen dem Heizmittel (32) und dem Teil (22, 24) der Vorformlinge (20) einzustellen, wobei die Regelungseinrichtungen (40) für die Position des Heizmittels (32) mindestens ein Steuerungselement (42) für die Verschiebung des Heizmittels (32) zwischen mindestens zwei querverlaufenden Positionen - jeweils proximal und distal - besitzen, die durch Schalteinrichtungen (54, 56, 58) indexiert sind, die zwischen dem Steuerungselement (42) und den Halterungen (34) auftreten, um das Heizmittel (32) in einem festgelegten, querverlaufenden Abstand zu dem Teil (22, 24) der Vorformlinge (20) zu positionieren, **dadurch gekennzeichnet, dass** das Steuerungselement (42) einen Schaltnocken (54) besitzt, der sich elastisch verformen kann, so dass er sich in die zusätzlichen Indexierkerben (56, 58) der Halterung (34) einfügt, die jeweils der proximalen bzw. distalen Position entspricht.

2. Ofen zum Erwärmen nach Anspruch 1, **dadurch gekennzeichnet, dass** die Halterungen aus mindestens zwei querverlaufenden Halterungen (34) bestehen, zwischen denen in Längsrichtung mindestens ein Heizmittel (32) verläuft, wobei jede Halterung (34) mindestens eine vordere Aufnahme (36) besitzt, in die eines der Enden des Heizmittels (32) mit Spiel montiert ist.

3. Ofen (10) zum Erwärmen nach Anspruch 2, **dadurch gekennzeichnet, dass** jede Halterung (34) mindestens eine querverlaufende Einkerbung (46) besitzt, die vorn in die Montageaufnahme (36) des Heizmittels und hinten außen an der Halterung einmündet, und in der das Steuerungselement (42) quer nach vorne oder nach hinten gleitet.

4. Ofen (10) nach einem der Ansprüche 2 oder 3, **dadurch gekennzeichnet, dass** das Steuerungselement (42) einen Kopfabschnitt (48) besitzt, der in der Aufnahme (36) der Halterung (34) aufgenommen wird, welcher in der Querverschiebung mit dem Heizmittel (32) verbunden ist.

5. Ofen (10) nach Anspruch 3, **dadurch gekennzeichnet, dass** das Steuerungselement (42) einen Verbindungszwischenabschnitt (50) besitzt, der quer hinter dem Kopfabschnitt (48) verläuft, und in der querverlaufenden Einkerbung (46) der Halterung (34) gleitet.

6. Ofen (10) zum Erwärmen nach Anspruch 5, **dadurch gekennzeichnet, dass** das Steuerungselement (42) quer hinter dem Verbindungszwischenabschnitt (50) einen Endabschnitt (52) besitzt, der aus der Einkerbung (46) vorsteht, und ein Greifelement zur Steuerung der Bewegung des Heizmittels (32) nach vorne oder nach hinten zwischen der proximalen und der distalen Position darstellt.

7. Ofen (10) zum Erwärmen nach einem der Ansprüche 5 oder 6, **dadurch gekennzeichnet, dass** der Schaltnocken (54) der querverlaufenden Positionen des Heizmittels (32) aus demselben Material hergestellt ist wie der Zwischenabschnitt (50) des Steuerungselementes (42).

8. Ofen (10) zum Erwärmen nach Anspruch 7, **dadurch gekennzeichnet, dass** das Heizmittel (32) an jedem seiner Enden jeweils einen Stecker (38) besitzt, der mit dem Kopfabschnitt (48) des Steuerungselementes (42) verbunden ist.

9. Ofen (10) zum Erwärmen nach einem Ansprüche 7 oder 8, **dadurch gekennzeichnet, dass** die querverlaufenden Halterungen (34) Kühlelemente (60, 72) durch Luftzirkulation der Stecker (38) des Heizmittels (32) aufweisen.

10. Ofen (10) zum Erwärmen nach Anspruch 9, **dadurch gekennzeichnet, dass** das Steuerungselement (42) vorn einen Deflektor (62) besitzt, um die Kühlluftzirkulation in Richtung des Heizmittels (32) zu begrenzen.

11. Ofen (10) zum Erwärmen nach einem der Ansprüche 2 bis 10, **dadurch gekennzeichnet, dass** jede Halterung (34) ein Gestell mit einer Vielzahl von Aufnahmen (36) in vertikaler Richtung bildet, so dass eine vertikale Übereinanderlagerung mehrerer Heizmittel (32) in einer festgelegten Höhe entsprechend der Höhe des Teils (22, 24) der Vorformlinge (20) möglich wird.

12. Ofen (10) zum Erwärmen nach einem der vorhergehenden Ansprüche, **dadurch gekennzeichnet, dass** die Schalteinrichtungen (54, 56, 58) automatische Verriegelungselemente für das Heizmittel (32) in seiner proximalen Position und in seiner distalen Position aufweisen.
